# EUROPÄISCHE PATENTANMELDUNG

(11) **EP 1 674 957 A1**
(43) Veröffentlichungstag der Anmeldung: **28.06.2006**
(21) Anmeldenummer: 04030318.2
(22) Anmeldetag: 21.12.2004
(51) Int. Cl.: G05B 19/418

(54) **Regelbasiertes, verteiltes Engineering**

(71) Anmelder: SIEMENS AKTIENGESELLSCHAFT, 80333 München (DE)
(72) Erfinder: Lange, Ronald, 90766 Fürth (DE); Leins, Ralf, 75228 Ispringen (DE); Meusser, Klaus, 90766 Fürth (DE); Schmoll, Jürgen, 91801 Markt Berolzheim (DE)

(57) **Zusammenfassung**

Die Erfindung betrifft System und ein Verfahren zur Bereitstellung von Vorgaben für ein Projekt, insbesondere für ein Engineering-Projekt zur Erstellung einer Automatisierungslösung. Das system weist erste Mittel (1) zum Erstellen einer die Vorgaben enthaltenden Datei (2) und mindestens eine Projektierumgebung (3) zur Erstellung einer Lösung auf Basis der Vorgaben auf, wobei die die Vorgaben enthaltende Datei (2) als Metawissen in die mindestens eine Projektierumgebung (3) importiert wird. Hiermit wird eine einfache Bereitstellung anzuwendender Vorgaben für ein Projekt ermöglicht.

## Beschreibung

Die Erfindung betrifft System und ein Verfahren zur Bereitstellung von Vorgaben für ein Projekt, insbesondere für ein Engineering-Projekt zur Erstellung einer Automatisierungslösung.

Komplexe Autornatisierungslösungen werden heute oft verteilt entwickelt, das heißt, an Entwicklung, Inbetriebsetzung, Betrieb und Wartung sind verschiedene unterschiedliche Teams oder gar Firmen beteiligt. Oft findet eine solche Trennung auch bereits in der Entwicklung einer Anlage statt, an der mehrere Firmen verschiedene Teile der Anlage erarbeiten. Beispiel: Firma A liefert eine spezielle Maschine, Firma B liefert die restlichen Maschinenteile, Firma C erstellt das HMI-System zum Bedienen/Beobachten der Anlage; schließlich ist eine weitere Firma mit der Integration beschäftigt. Des Weiteren gibt es einen Generalunternehmer, der die einzelnen Auftragnehmer anleitet, und natürlich den Endkunden.

Ein Engineering-System bietet dem Ersteller bzw. Projekteur sehr viele verschiedene Möglichkeiten, seine Aufgaben zu lösen. So können z.B. für eine Maschine ein leistungsfähiger Controller (SPS) oder mehrere kleinere Controller verwendet werden. Die Benennung von Variablen oder Programmteilen ist völlig frei. Auch die Verwendung von Ressourcen der Anlage - z.B. IP-Adressen - können im Wesentlichen frei vergeben werden.

Auf der anderen Seite hat der Auftraggeber/Generalunternehmer ein erhebliches Interesse daran, diese Freiheitsgrade einzuschränken. Mögliche Gründe hierfür sind z.B.:
- Alle Teilprojekte sollen ein einheitliches Namensvergabe-Schema befolgen, damit sich das Servicepersonal in allen Teilanlagen zurecht findet
- Die Vergabe der Systemresourcen - z.B. IP-Adressen - folgen einem einheitlichen Schema, um Konflikte bei der Integration der Teilprojekte zur Gesamtlösung möglichst von vorne herein zu vermeiden
- Das Spektrum an verwendeten Hardware-Komponenten soll möglichst klein und einheitlich sein, um die Ersatzteil-Bevorratung möglichst kostengünstig zu gestalten.

Die Auftraggeber/Generalunternehmer erlassen deshalb oft Vorschriften für ihre Zulieferer und Unter-Auftragnehmer, wie gewisse Aspekte des Engineering auszuführen sind.

Heutzutage werden die o.g. Regeln als Dokumente zwischen den Unternehmen ausgetauscht. Die Befolgung der Regeln obliegt den einzelnen Engineers; der Endkunde/Generalunternehmer kann die Einhaltung nur manuell überwachen.

Die Aufgabe der vorliegenden Erfindung ist daher, ein System und ein Verfahren anzugeben, mit dessen Hilfe eine einfache Bereitstellung anzuwendender Vorgaben für ein Projekt ermöglicht wird.

Die Aufgabe wird gelöst durch ein System zur Bereitstellung von vorgaben für ein Projekt, insbesondere für ein Engineering-Projekt zur Erstellung einer Automatisierungslösung, mit ersten Mitteln zum Erstellen einer die Vorgaben enthaltenden Datei und mindestens einer Projektierumgebung zur Erstellung einer Lösung auf Basis der Vorgaben, wobei die die Vorgaben enthaltende Datei als Metawissen in die mindestens eine Projektierumgebung importiert wird.

Die Aufgabe wird weiterhin gelöst durch ein Verfahren zur Bereitstellung von Vorgaben für ein Projekt, insbesondere für ein Engineering-Projekt zur Erstellung einer Automatisierungslösung, bei dem eine die Vorgaben enthaltenden Datei insbesondere durch einen Auftraggeber erstellt wird und eine Lösung auf Basis der Vorgaben erstellt wird, wobei die die Vorgaben enthaltende Datei als Metawissen in mindestens eine Projektierumgebung importiert wird.

Der Erfindung liegt die Erkenntnis zugrunde, dass bei einer existierenden Vorgabemöglichkeit von relevanten Regen oder Einschränkungen für ein Projekt eine wesentlich leichtere Durchführung ermöglicht wird, da einzelne Teilprojekte auf Basis der Vorgaben arbeiten können, ohne dass in Dokumenten immer wieder nachgeschaut werden muss, wie die Vorgaben genau aussehen. Es kann bsp. gleich eine auf den Vorgaben basierende Einschränkung bsp. der bereitstehenden Elemente oder Baugruppen bzw. der von den Elementen zur Verfügung stehenden Eigenschaften vorgenommen werden.

Weiterhin kann ebenfalls von einem Anwender der Projektierumgebung zu einem bestimmten Zeitraum ein auf den Vorgaben basierender Prüfalgorithmus gestartet werden, der anschließend eine Liste mit den im Projekt vorliegenden Verstößen gegen die Vorgaben liefert. Auf Basis der Liste können die Verstöße dann behoben werden.

Das erfindungsgemäße System ermöglicht einen schnelleren Austausch und eine einfachere Aktualisierung von Vorgaben bzw. von Regeln und Einschränkungen.

In vorteilhafter Weise hilft das Engineering-System bei der Einhaltung oder Kontrolle der Regeln. Dadurch wird im Projekt eine höhere Qualität erzielt und es entstehen geringere Kosten bzw. Projektaufwände.

weiterhin wird die Qualität der Gesamtlösung verbessert, wodurch eine mittelbare Kostenersparnis erreicht wird.

Weitere vorteilhafte Ausbildungen der Erfindung sind in den Unteransprüchen angegeben.

Im Folgenden wird die Erfindung anhand der Figuren näher beschrieben und erläutert.

Es zeigen:
- Fig 1: den Stand der Technik bei der Erstellung einer Automatisierungslösung,
- Fig 2: eine schematische Darstellung des Systems zur Bereitstellung von Vorgaben

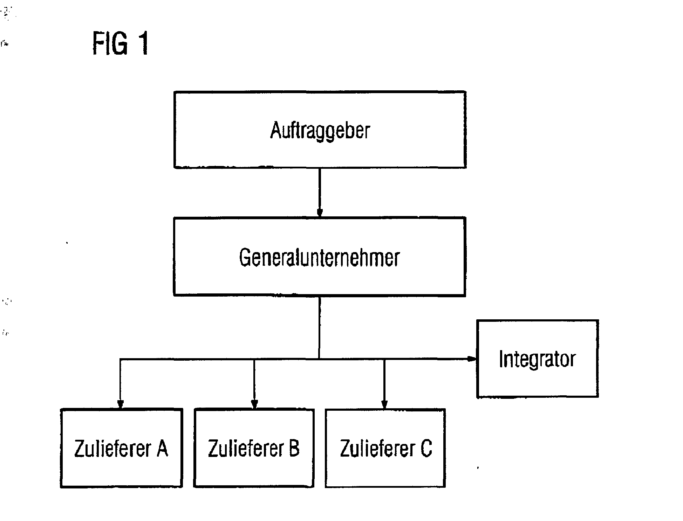

Figur 1 zeigt den normalen Informationsfluss bzw. die Weitergabe von für ein Projekt relevanten Vorgaben von einem Auftraggeber oder Generalunternehmer zu den beteiligten Auftragnehmern, die als Zulieferer oder Integratoren tätig sind. Für das Projekt relevante Vorgaben werden in der Regel in Form von Dokumenten an die einzelnen Beteiligten geliefert. Die Auftragnehmer müssen den Dokumenten die Vorgaben entnehmen und anschließend umsetzen bzw. sich an die Vorgaben halten. Hierbei muss die Einhaltung "händisch" durch Einsicht oder Test überprüft werden.

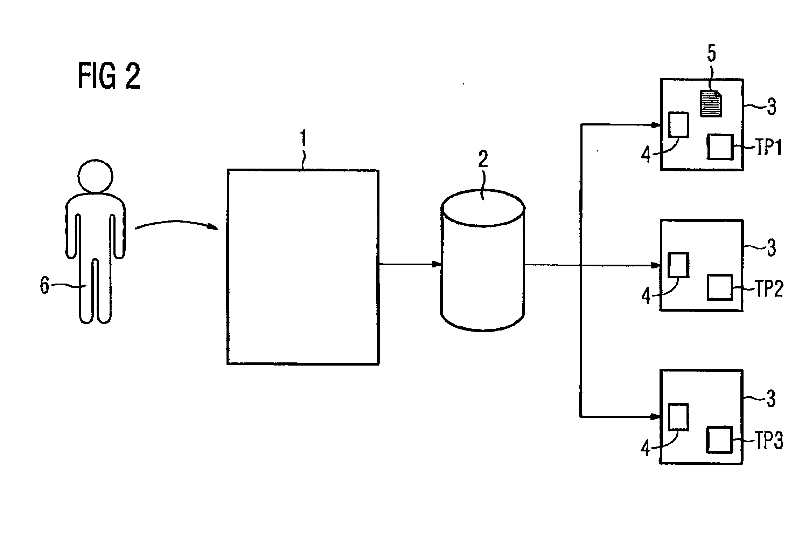

Figur 2 zeigt eine schematische Darstellung des erfindungsgemäßen Systems. Von einem Auftraggeber 6 werden mittels einer formalen Beschreibung durch die ersten Mittel 1 Vorgaben in einer Datei 2 gespeichert. Die Datei 2 mit den Vorgaben wird von einer oder mehreren Projektierumgebungen 3 importiert. In den Projektierumgebungen stehen Auswertemittel 4 zur Auswertung der Vorgaben zur Verfügung. Die Vorgaben stehen anschließend im Rahmen der Projektierumgebung für das Projekt automatisch zur Verfügung. Für verschiedenen Teilprojekte TP1, TP2, TP3 können unterschiedliche Vorgaben zur Verfügung gestellt werden. Wird im Rahmen des Projekts ein Prüfalgorithmus verwendet, der auf die bereits erstellten Teile der Lösung angewendet wird, so liegen die Vorgaben dem Prüfalgorithmus zugrunde und erkannte Abweichungen von den Vorgaben werden in einer Liste 5 angezeigt.

Die Erfindung geht von einer formalen Beschreibung der Regeln aus.

Dazu erstellt bsp. der Auftraggeber 6 oder der Generalunternehmer eine Datei 2, die mithilfe einer geeigneten Sprache die gewünschten Einschränkungen oder Regeln definiert. Diese Regeln können auch je Teilanlage weiter detailliert werden, um z.B. unterschiedliche Namensvergaberegeln für unterschiedliche Anlagenteile zu vergeben. Weiterhin können die Regeln neben konkreten Vorgaben auch Bereichsdefinitionen enthalten, so dass z.B. für eine Gerateadresse (IP-Adresse) ein erlaubter Bereich statt konkreter Adressen definiert wird. Auch Codierungsregeln sind möglich, z.B. welche Programmiersprachen verwendet werden dürfen.

Die Regeldatei wird als sogenanntes Metawissen in das Engineering-Werkzeug importiert. Durch diesen Import kann das Werkzeug entweder die Eingabe nicht zulässiger Konfigurationen von vorne herein ausschließen (indem z.B. der Hardware-Katalog entsprechend weniger Baugruppen anzeigt), oder aber als Prüfalgorithmus zu frei wählbaren Zeitpunkten anwenden. Der Anwender bekommt dann eine Liste vorhandener Verstöße und kann die Projektierung entsprechend anpassen.

Das gleiche kann auch der Generalunternehmer ausführen. Bei Abnahme der Anlage kann er seine eigenen Prüfalgorithmen über das Projekt ausführen und so die Qualität der zugelieferten Daten überwachen.

Werden die Regeln im Verlauf des Projektes angepasst oder erweitert, so importiert der Zulieferer erneut die Regeldatei.

In einer weiteren Ausbaustufe kann das Konzept auch mit Bibliotheken des Auftraggebers/Generalunternehmers kombiniert werden. In diesem Fall werden die Bibliotheks-Elemente um Regeln zu ihrer Verwendung ergänzt, z.B. auf welchen Geräten dieses Element verwendet werden darf oder in welchem Bereich ein Parameter gesetzt werden kann.

## Patentansprüche

1. System zur Bereitstellung von Vorgaben für ein Projekt, insbesondere für ein Engineering-Projekt zur Erstellung einer Automatisierungslösung, mit
• ersten Mitteln (1) zum Erstellen einer die Vorgaben enthaltenden Datei (2) und
• mindestens einer Projektierumgebung (3) zur Erstellung einer Lösung auf Basis der Vorgaben, wobei die die Vorgaben enthaltende Datei als Metawissen in die mindestens eine Projektierumgebung importiert wird.

2. System nach Anspruch 1, bei dem die Projektierumgebung über Auswertemittel (4) für die die Vorgaben enthaltende Datei verfügt.

3. System nach Anspruch 1 oder 2, bei dem die Mittel zum Erstellen der Vorgaben zur Erstellung von unterschiedlichen Vorgaben für verschiedene Teilprojekte (TP1, TP2, TP3) vorgesehen sind.

4. System nach einem der vorhergehenden Ansprüche, bei dem die Vorgaben als Regeln und/oder Einschränkungen ausgebildet sind.

5. System nach einem der vorhergehenden Ansprüche, bei dem die Auswertemittel (4) derart ausgebildet sind, dass die Projektierumgebung nicht zulässige Eingaben ausschließt.

6. System nach einem der Ansprüche 1 bis 4, bei dem die Auswertemittel (4) derart ausgebildet sind, dass die Vorgaben als Prüfalgorithmus anwendbar sind.

7. System nach Anspruch 6, bei dem die Projektierumgebung zur Erzeugung einer Liste (5) von Verstößen gegen die Vorgaben vorgesehen ist.

8. System nach einem der vorhergehenden Ansprüche, bei dem die die Vorgaben enthaltende Datei zur Aktualisierung vorgesehen ist, wobei die aktualisierte Datei erneut in die mindestens eine Projektierumgebung importiert wird.

9. System nach einem der vorhergehenden Ansprüche, bei dem die Vorgaben zur Ergänzung von Bibliotheks-Elementen vorgesehen sind, wobei die Elemente einer Bibliothek eines die Vorgaben erstellenden Auftraggebers (6) entstammen.

10. Verfahren zur Bereitstellung von Vorgaben für ein Projekt, insbesondere für ein Engineering-Projekt zur Erstellung einer Automatisierungslösung, bei dem
• eine die Vorgaben enthaltenden Datei (2) insbesondere durch einen Auftraggeber erstellt wird und
• eine Lösung auf Basis der Vorgaben erstellt wird, wobei die die Vorgaben enthaltende Datei als Metawissen in mindestens eine Projektierumgebung importiert wird.

11. Verfahren nach Anspruch 10, bei dem die die Vorgaben enthaltende Datei von der Projektierumgebung (3) ausgewertet.

12. Verfahren nach Anspruch 10 oder 11, bei dem unterschiedlichen Vorgaben für verschiedene Teilprojekte (TP1, TP2, TP3) erstellt werden.

13. Verfahren nach einem der Ansprüche 10 bis 12, bei dem Regeln und/oder Einschränkungen vorgegeben werden.

14. Verfahren nach einem der Ansprüche 10 bis 13, bei nicht zulässige Eingaben durch die Projektierumgebung (3) ausgeschlossen werden.

15. Verfahren nach einem der Ansprüche 10 bis 13, bei dem die Vorgaben als Prüfalgorithmus angewendet werden.

16. Verfahren nach Anspruch 14, bei dem eine Liste (5) von Verstößen gegen die Vorgaben durch die Projektierumgebung erzeugt wird.

17. Verfahren nach einem der Ansprüche 10 bis 16, bei dem die die Vorgaben enthaltende Datei aktualisiert wird, wobei die aktualisierte Datei erneut in die mindestens eine Projektierumgebung importiert wird.

18. Verfahren nach einem der Ansprüche 10 bis 17, bei dem Bibliotheks-Elementen durch Vorgaben ergänzt werden, wobei die Elemente einer Bibliothek eines die Vorgaben erstellenden Auftraggebers (6) entstammen.
